# EUROPEAN PATENT APPLICATION

(11) **EP 4 556 167 A1**
(43) Date of publication of application: **21.05.2025**
(21) Application number: 23210002.4
(22) Date of filing: 15.11.2023
(51) Int. Cl.: B25F 5/00

(54) **A METHOD TO RESTRICT THE USE OF A POWER TOOL, A BATTERY PACK OR A CHARGER AND A POWER TOOL ECOSYSTEM**

(71) Applicant: Hilti Aktiengesellschaft, 9494 Schaan (LI)
(72) Inventor: Malik, Muhammad Salman, 86159 Augsburg (DE)
(74) Representative: Hilti Aktiengesellschaft Corporate Intellectual Property

(57) **Abstract**

A method to restrict the use of a tool device, the tool device being a battery pack, a power tool, or a charger of a power tool system, is proposed, the method is comprising the steps of:
- assigning the tool device to a first area and/or to a first wireless network, particularly by an asset management system,
- locating the tool device in a first area and/or registering the tool device to a first wireless network,
- determining whether the tool device is in the first area and/or connected to and/or connectable to the first wireless network,
- disabling or limiting the operation of the tool device if the result of the determining is that the tool device is not in the first area and/or not connected to and/or not connectable to the first wireless network.

## Description

### FIELD OF INVENTION

The present invention relates to a method to restrict the use of a tool device, i.e., a power tool, a battery pack, or a charger, to a power tool ecosystem configured for the method and to a computer program product to carry out the method.

### BACKGROUND OF THE INVENTION

Power tools and their accessories can get lost, misplaced or stolen. This can result in significant losses for workshops or construction companies. Current power tools are mostly cordless power tools and cordless power tool systems comprise power tool, battery, and charger. Physical protection by locking devices away is a common solution against theft, however, it is difficult to ensure a proper locking away on construction sites. Therefore, other methods and systems have been developed.

US20170364360A1 describes techniques for providing anti-theft protection for power tools by a power tool which disables itself after a predetermined amount of usage time, and re-enables usage only after secure, software-based authentication of the device.

JP2005342796A describes a rechargeable electric tool and means for transmitting a search signal in a rechargeable electric tool in which a battery pack is detachable from the electric tool body. The electric tool main body and the battery pack is provided with notification means for notifying the user in response to the search signal. Specifically, the battery pack is provided with search signal receiving means that operates using the built-in rechargeable battery as a power source and can notify a user by sound or light.

JP4678199B2 describes an authentication unit that transmits or receives information on tool usage to or from an authentication device worn by the user, and a tool usage confirmation output from the authentication unit or the authentication device that performs the authentication operation. A person who does not wear the proper authentication equipment cannot use the power tool.

US10285003B2 describes a power distribution box including a power input, an AC output, a power-line adapter, and a gateway device. The power-line adapter is coupled to the power input and configured to receive power via the power input and to communicate with an external network. The gateway device is coupled to the power-line adapter and includes a wireless network module and a translation controller. The wireless network module is configured to communicate with power tool devices in a wireless network, and the translation controller is coupled to the power-line adapter and enables communications between the wireless network module and the external network through the power-line adapter.

JP2017126560A describes a power tool system and an adapter for the power tool system to prevent theft of a handheld power tool, its battery, and its charger. Each of the handheld power tool and the battery has a passcode. Each passcode is compared, for example, when the battery is attached to the power tool or electrically connected in other ways. When the pass code of the power tool and the battery pack does not match or does not correspond in a predetermined manner, the power tool, or the battery the power tool cannot be operated. Also, a battery charger may have a pass code. The battery and charger passcodes are directly compared, for example, when a battery is attached to a charger for charging. When the pass codes of the battery and the charger do not match or do not correspond, charging of the battery is hindered.

US2014339922A1 describes a battery pack which includes an electrical energy store, a data memory, and an interface for the alternative connection of the battery pack to a data source or a data sink. The data memory is designed to store data from the data source while the interface is connected to the data source, and to supply the data in the data memory to the data sink while the interface is connected to the data sink.

It is one object of the present invention to provide an improved power tool ecosystem and a method to restrict the use of a tool device, thus enabling controlling of the use of missing or stolen tool devices, in particular, improved or facilitated preparation of power tools, their battery packs and chargers for theft deterrence or measures after theft has happened.

### DISCLOSURE OF THE INVENTION

A method to restrict the use of a tool device, the tool device being a battery pack, a power tool, or a charger of a power tool system, is proposed, the method is comprising the steps of:
- assigning the tool device to a first area and/or to a first wireless network, particularly by an asset management system,
- locating the tool device in a first area and/or registering the tool device to a first wireless network,
- determining whether the tool device is in the first area and/or connected to and/or connectable to the first wireless network,
- disabling or limiting the operation of the tool device if the result of the determining is that the tool device is not in the first area and/or not connected to and/or not connectable to the first wireless network.

If power tools, battery packs, and/or chargers work only in a defined area or only when connected to a defined wireless network, this deters thieves, as the tool devices cannot be used freely at other places. Usually, the assignment to a location or to a wireless network, which usually is also locally confined, is done in an asset management system. This can be done, e.g., in an office where several construction sites or buildings or workers or teams are managed. If a location has been assigned, this location has to be determined and tracked, there are various way for determining location, e.g., using GPS data. If a wireless network has been assigned, the tool device has to be hooked to this wireless network, this is done by a registering process. Determining whether a tool device is in the assigned area, can be done by comparing the assigned data with the positioning data of a tool device. Determining whether a tool device is connected or connectable to a network can be done using the protocols of the wireless connection. Important for the deterrence effect is, that the tool device can be made less functional. E.g., the tool device might simply be disabled, so it does not work anymore. The tool device may also be only limited in its functions, e.g., the maximum torque of a power tool is reduced, or the maximum loading level of a battery is reduced.

In an embodiment, the first wireless network is a network created by a first mobile network device, particularly, a smartphone, a laptop, or a tablet. By creating the first mobile network with a mobile network device, a tool device can be, essentially, assigned to a worker with this mobile network device. E.g., a worker can create with a smartphone a personal, local wireless network, and tool devices assigned to this network will only work when they are connected or connectable to the network created by this smartphone.

In an embodiment, the first wireless network is a network created by a first stationary network device, particularly, by a first gateway and/or set up as a mesh network. Large construction sites and buildings are often equipped with local wireless network for various purposes. Such a network with stationary network devices can be used to limit the useable area for a tool device.

A correct network connection between a network device and an assigned tool device has to be established. Protection for the connection to the first wireless network maybe desired, so that the tool device and the network device know who they are and that they are allowed to collaborate and that such a connection cannot be easily manipulated.

In an embodiment, the registering to the first wireless network therefore comprises:
- the tool device iteratively sending first beacons,
- the first mobile or stationary network device scanning for first beacons,
- when the first mobile or stationary network device receives one or more first beacons from the tool device, the first mobile or stationary network device deriving from the first beacon and/or from a communication, established upon receiving the first beacon, between the first mobile or stationary network device and the tool device, tool device information, in particular an identifier, of the tool device,
- the first mobile or stationary network device communicating the tool device information to the asset management system,
- the asset management system deciding with the tool device information whether the tool device is assigned to the first wireless network,
- the asset management system and/or, upon an approval from the asset management system, the first mobile or stationary network device creating credentials on the first mobile or stationary network device and on the tool device for wireless pairing, if the asset management system has decided that the tool device is assigned to the first wireless network.

This process involves the asset management system, the tool device, and the network device. In particular, when there is a good, e.g., cellular, connection between the asset management system and the network device, it is convenient to store and process data in the asset management system. Tool devices and network devices may be identified with identifiers, usually unique identifiers. Such a registering to the first network may use various cryptographic and security technologies.

In an embodiment, e.g., when the connectivity between asset management system and network device is not always stable, the registering to the first wireless network may comprise:
- the first mobile or stationary network device obtaining information on all tool devices assigned to the first wireless network from an asset management system,
- the tool device iteratively sending first beacons,
- the first mobile or stationary network device scanning for first beacons,
- when the first mobile or stationary network device receives one or more first beacons from the tool device, the first mobile or stationary network device deriving from the first beacon and/or from a communication, established upon receiving the first beacon, between the first mobile or stationary network device and the tool device, tool device information, in particular an identifier, of the tool device,
- the first mobile or stationary network deciding with the obtained information on all tool devices assigned to the first wireless network and the tool device information whether the tool device is assigned to the first wireless network,
- the first mobile or stationary network device creating credentials on the first mobile or stationary network device and on the tool device for wireless pairing, if it has decided that the tool device is assigned to the first wireless network.

The network device may download lists of tool devices which are assigned to it. This download may be repeated from time to time. Due to the downloaded data available on the network device, it is not necessary to communicate real-time between the asset management system and the network device for registering a tool device.

In an embodiment, the first mobile or stationary network device communicates with the asset management system via cellular connectivity. Cellular communication using the mobile telephone networks is a practical way to set up a communication path between an asset management system, which might be distributed and might be hosted away from the location of the network device. Smartphones often include wireless protocols in addition to its mobile communication technologies, such as Bluetooth or IEEE 802.11 (WiFi) and may be available on site with the worker anyway. A smartphone may be set up as hotspot for the tool device and may communicate via its telecommunication protocols to the asset management system.

In an embodiment, the first stationary network device communicates with the asset management system via a second mobile network device, which is connected to the first stationary network device, and which communicates via cellular connectivity to the asset management system. If only a local wireless network is available on-site, the connection for such a stationary network device to the asset management system may be relayed via a mobile network device, e.g., a smartphone.

It is not sufficient if a tool device is only recognized once in a wireless network, it has to be tracked, whether the tool device leaves the network. There are various ways, which might lead to different power consumption, for such a tracking. In an embodiment, determining whether the tool device is in the first area and/or connected to and/or connectable to the first wireless network comprises:
- establishing a persistent connection, particularly a Bluetooth connection, between the tool device and the first wireless network and
- determining by the tool device and/or the first mobile or stationary network device that the tool device is not connected or connectable to the first wireless network, when the connection breaks and, optionally, cannot be reestablished within a predefined first time period, particularly, within 1 minute.

A persistent Bluetooth connection may be a practical implementation to determine whether the tool device is connected or connectable. Other embodiments may use WiFi-protocols for the determining of the connection.

In an embodiment, determining whether the tool device is in the first area and/or connected to and/or connectable to the first wireless network comprises:
- sending second beacons by the tool device
- scanning for the second beacons with the first mobile or stationary network device,
- determining by the first mobile or stationary network device whether the tool device is connectable based on the results of the scanning for the second beacon, particularly determining that the tool device is not connectable, when no second beacon is detected within a predefined second time period, particularly within 1 minute,
- optionally, informing the tool device iteratively that it is connectable to the first wireless network by establishing a connection of the tool device and the first wireless network, in particular a temporary Bluetooth connection.

Sending only beacons might be less power consuming compared to a persistent Bluetooth connection. For the tool device to be informed about the status of the connection, additional information has to be transferred to the tool device.

In an embodiment, determining whether the tool device is in the first area and/or connected to and/or connectable to the first wireless network comprises:
- sending third beacons by the first mobile or stationary network device,
- scanning for the third beacons with the tool device,
- determining by the tool device whether it is connectable with the first mobile or stationary network device based on the scanning for the third beacons, particularly, determining that the tool device is not connectable when no third beacon is detected within a predefined third time period, particularly within 1 minute.

In this embodiment the information on the connection status is directly generated in the tool device, which may be useful for the disabling or limiting of operation. The first, second, and third time period may be predefined independently to the same or different times.

In an embodiment, disabling or limiting the operation of the tool device is done by the tool device when the tool device has determined that it is not connected to and/or not connectable to the first wireless network or after a residual time period, operating time period, and/or number of operating actions, which is stored on the tool device, after the tool device has determined that it is not connected to and/or not connectable to the first wireless network. Disabling or limiting the operation of the tool device based on settings and information in the tool device is a way to ensure that misuse of the tool device may be avoided.

There are alternative situations, where an automatic disabling or limiting the operation of the tool device is not desirable. Therefore, the asset management system may be involved in the disabling or limiting. In an embodiment, the method to restrict the use of a tool device, is comprising:
- sending a result from determining whether the tool device is connected to and/or connectable to the first wireless network to the asset management system,
- sending a command to disable or limit the operation to the tool device by the asset management system.

There are various ways to forward this command to the tool device:
- by cellular connectivity, if the tool device is equipped with cellular connectivity, or
- via a first charger, which is equipped with cellular connectivity, to the tool device if the tool device is a battery pack being charged on the first charger,
- via a first charger, which is equipped with cellular connectivity, and via a first battery pack, which has been charged on the charger and is supplying the tool device with power if the tool device is a power tool, and/or
- via a second wireless network, which is connected to the asset management system, particularly, a second wireless network configured to register the tool device when assigned to it, particularly, an unauthorized wireless network that recognizes that the tool device is not authorized to register.

The asset management system may be used, e.g., to obtain approval for disabling. The disabling or limiting command has to be communicated, however, to the tool device, after it has left the first wireless network. There may be different communication paths, depending on the situation.

In an embodiment, the tool device is a power tool, which is not equipped with wireless connectivity and which is equipped with wired connectivity for communication with a battery pack connected to the power tool, and the power tool communicates with the first wireless network, particularly, registers and/or sends beacons to the first wireless network, through the battery pack. Battery packs in a power tool system can be exchanged easier than power tools, e.g., battery packs without wireless connectivity may be exchanged with battery packs with wireless connectivity. Using the battery packs for relaying communication to and from a power tool might therefore be a useful embodiment to adapt existing systems in a way to use the method for restricting use of tool device.

In an embodiment, a location determining module of the tool device is locating the tool device, the tool device is sending iteratively location updates via cellular connectivity to the asset management system, and the asset management system is determining whether the tool device is in the first area based on the location updates. Alternatively or additionally to the connection to a wireless network, position data of tool devices may be used directly.

In an embodiment, a tag, attached to the tool device, is sending fourth beacons; a second gateway with cellular connectivity and positioning technology is scanning the fourth beacons and is locating the tool device; the second gateway is sending iteratively location updates via cellular connectivity to the asset management system; and the asset management system is determining whether the tool device is in the first area based on the location updates. If there is no position data available in the devices of the power tool system, tags and gateways may be used to enable the method to restrict the use of a tool device. The first, second, third, and fourth beacons may be similar or different RF beacons.

In an embodiment, the location determining module and/or the second gateway uses data comprising global positioning system (GPS) data, cellular network data, and/or data from wireless networks, particularly according to IEEE 802.11-Standard (WiFi) for locating.

Further a power tool ecosystem is proposed comprising: an asset management system; a power tool system comprising as tool devices a plurality of power tools, optionally, configured for wireless communication, particularly, for cellular communication, a plurality of battery packs, optionally, configured for wireless communication, particularly, for cellular communication, and a plurality of chargers, optionally, configured for wireless communication, particularly, for cellular communication. The ecosystem is further comprising a stationary and/or a mobile network device, and/or a location determining module in one or more of the tool devices or tags, sending beacons, attached to one or more device tools and a gateway with cellular connectivity and positioning technology. The power tool ecosystem is configured for the method to restrict the use of a tool device.

Further a computer program product is proposed with instructions which, when the program is executed by one or more processors of the asset management system, the tool devices, the mobile and/or stationary network devices in the power tool ecosystem, cause the power tool ecosystem to carry out the method to restrict the use of a tool device.

The various embodiments of the method to restrict the use of a tool device may be combined with the disclosed power tool ecosystem.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows in a flowchart a process flow of a method to restrict the use of a tool device;
- Fig. 2: shows a schematic presentation of the method to restrict use of a tool device with a mobile network device and how tool devices work with the network of the assigned worker;
- Fig. 3: shows a schematic presentation how a power tool without wireless connectivity may be included in the power tool ecosystem;
- Fig. 4: shows a schematic presentation of the method with a stationary network device;
- Fig. 5: shows a schematic presentation with a stationary network device connected via a mobile network device to an asset management system;
- Fig. 6: shows a schematic presentation with a stationary device and an implementation of a mesh net;
- Fig. 7: shows a schematic presentation of a geo-fencing solution; and
- Fig. 8: shows a schematic presentation of a geo-fencing solution with human approval.

In the Figures, like reference numerals designate like or functionally equivalent elements, unless otherwise indicated.

### DETAILED DESCRIPTION OF ILLUSTRATIVE EMBODIMENTS

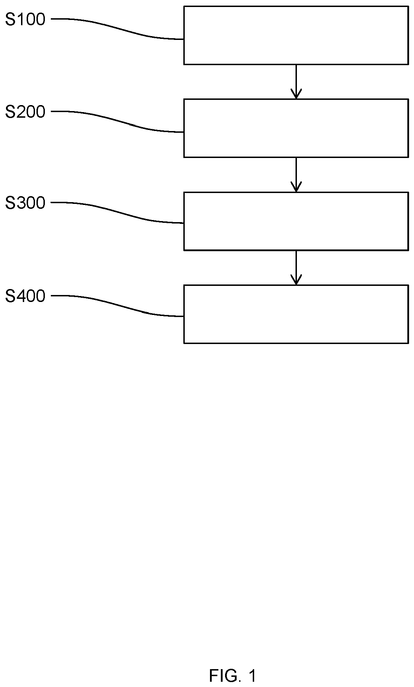

Fig. 1 shows in a flowchart a process flow of a method to restrict the use of a tool device.

In step S100, a tool device 120, 130, 140 is assigned to an area and/or to an authorized wireless network 221. This is usually done in an asset management system 100 which is accessed, e.g., by a manager 801 with an input/output device 110. Assigning the tool device 120, 130, 140 is defining where the tool device 120, 130, 140 should be used. This may be a geographical limitation, or it might be a limitation with regard to a certain network, an authorized network 221 to which the tool device 120, 130, 140 needs to be connected to operate properly. The tool device 120, 130, 140 may be a power tool 120, a battery pack 130, or a charger 140 from a power tool system.

In step S200, the location of the tool device 120, 130, 140 is determined. For a restriction of the tool device 120, 130, 140 to be used only when connected to an authorized network 221, this is the registration of the tool device 120, 130, 140 on the wireless network 221, to which it has been assigned. The registration usually comprises a pairing.

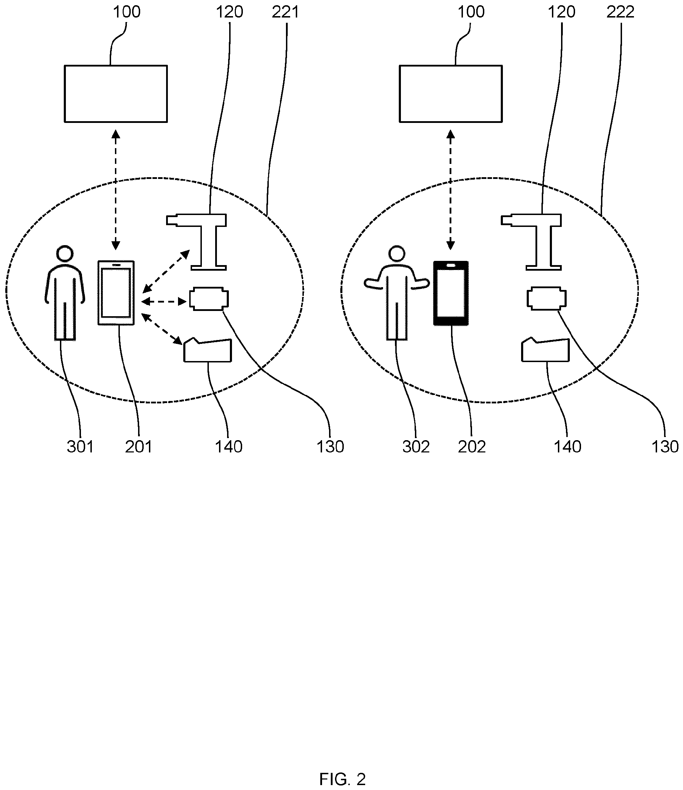

In step S300, it is determined whether the tool device 120, 130, 140 is staying in the assigned area or staying connected to the authorized network 221. There are various ways to track, e.g., the connection to the authorized network 221, which are described in more detail with regard to Fig. 2. Depending on the quality of the connection and on the used communication protocol in the authorized wireless network 221, there might be breaks in which it is difficult to assess whether the connection is still established, therefore it can be necessary to check also whether the device is still connectable to the network 221.

In step S400, the operation of the tool device 120, 130, 140 will be disabled or limited if it has been determined that the tool device 120, 130, 140 is not connected to and/or not connectable to the authorized network 221. It may be useful, if the step S400 is done directly by the tool device 120, 130, 140 itself, thus avoiding further communication, in particular further communication after the tool device 120, 130, 140 has left the authorized network 221 and might be more difficult to access. Therefore, a default setting for a tool device 120, 130, 140 to disable itself and stop operating or at least a predefined limiting of the operation of the tool device 120, 130, 140 may be seen as useful. The tool device 120, 130, 140 may disable itself immediately or after a predefined period after it has determined that it is not connected and not connectable to the authorized network 221.

Fig. 2 shows a schematic presentation of the method to restrict use of a tool device 120, 130, 140 with a mobile network device 201 and how tool devices 120, 130, 140 work with the network 221 of the worker 301, 302. In an asset management system 100, a worker 301 may get assigned his own tool devices 120, 130, 140, i.e., power tools 120, battery packs 130, and chargers 140. Usually, managers 801 assign these tool devices 120, 130, 140 to workers 301, 302 in an asset management system 100. Workers 301, 302 create personal networks 221, 222 with their mobile network devices 201, 202 they carry with them, e.g., a smartphone or a tablet computer, and their assigned tool devices 120, 130, 140. The tools devices only operate if they can detect that they are present within their personal networks 221, 222.

Workers 301, 302 need to register their assigned tool devices 120, 130, 140 with their personal network 221, 222 this may be done via a pairing with the mobile network devices 201, 202. This is a three-way process between the asset management system 100, the mobile network device of the worker 201, 202, e.g., the smartphone, and their assigned tool devices 120, 130, 140. The asset management system 100 enforces that worker 301, 302 can only pair his own assigned tool devices 120, 130, 140 with their mobile network devices 201, 202.

For the pairing the tool devices 120, 130, 140 can send RF beacons that can be scanned by the mobile network devices 201, 202. The mobile network device 201 reports the discovered tool device 120, 130, 140 to the asset management system 100. This system checks if the discovered tool device 120, 130, 140 is assigned to the mobile network device 201 of the worker 301. If this is the case, the asset management system 100 can create and install unique credentials, e.g., network ID, network keys on the mobile network device 201 and on the tool device 120, 130, 140 so that they can uniquely identify their personal network 221.

Alternatively, the mobile network device 201 of a worker 301 can download a list of assigned tool devices 120, 130, 140 from the asset management system 100. Based on this list the mobile network device 201 can create and install unique credentials on the tool devices so that they can identify to the personal network 221.

The assigned tool devices 120, 130, 140 operate only if they are present in their personal networks 221. When they are outside their personal network 221, e.g. in an unauthorized personal network 222 of a different worker 302 they will not operate. Fig. 2 shows the move of the tool devices 120, 130, 140 from the personal network 221, where the tool devices 120, 130, 140 are registered to the unauthorized personal network 222. The tool devices 120, 130, 140 may try to register to the unauthorized personal network 222, as described above for the personal network 221. However, in the asset management system 100 it will be determined, that the tool devices 120, 130, 140 are not assigned to the unauthorized personal network 222. As the tool devices 120, 130, 140 have left the range of their personal network 221 and determine that they are not any longer connected to their personal network 221 and also cannot get connected to it again, they will lock themselves and stop working.

New power tools 120, battery packs 130 or chargers 140 may only enter a discovery mode, e.g., send RF beacons and do not operate until they are assigned to a worker 301, 302 and find their personal networks 221, 222. This is similar tool devices 120, 130, 140 which are already assigned to a worker 301, 302 and paired with the respective personal networks 221, 222, but now detect that they are not present in their personal networks 221, 222 anymore. They may not operate but only search for their personal networks 221, 222.

There are several ways how the mobile network devices 201, 202 of the workers 301, 302 interact with the tool devices 120, 130, 140. E.g., the mobile network device 201 of a worker 301, 302 maintains a persistent connection with the registered tool devices 120, 130, 140, e.g., a persistent Bluetooth connection. When tool devices 120, 130, 140 are disconnected, e.g., because they get out of the RF range of their mobile network device, they may stop operating immediately, or after a residual time period, e.g., to avoid that an unauthorized worker 302 is helping the authorized worker 301 and is in the middle of a boring screwing process, when the authorized worker 301 leaves with his smartphone 201 to get new material.

Tool devices may also send RF beacons, which are scanned by the worker's 301, 302 mobile network devices 201, 202 to know that they are still present within their personal network 221, 222. From time to time, the mobile network devices 201, 202 may also inform these tool devices 120, 130, 140 about their presence. This may be done, e.g., by establishing a temporary Bluetooth connection, to let them know that they are also present in their assigned personal network 221 and also to read any additional data.

Alternatively, the mobile network devices 201, 202 of the workers 301, 302 may send the RF beacons and these beacons are scanned by the assigned tool devices 120, 130, 140 informing them that they are still in their personal network 221. When the tool devices 120, 130, 140 find in their scans these RF beacons not anymore, the tool devices 120, 130, 140 may stop operating. It is also possible that the worker 301, 302 wears a tag sending these RF beacons.

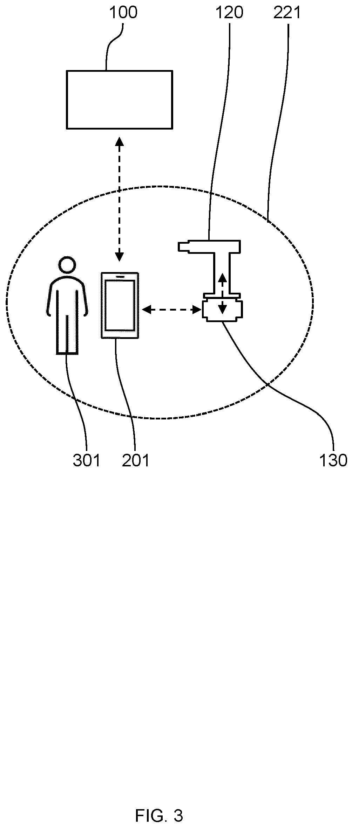

There are power tool systems where battery packs 130 are able to register to a wireless network and pair, e.g., with a mobile network device 201, 202 and operate as described above. Power tools 120 may, however, only communicate with their attached battery packs 130, e.g., via a wired protocol. Such a system is shown in Fig. 3. In such a power tool system the power tools 120 may communicate with the personal network 221 via a connected battery pack 130, e.g., to get necessary credentials from the mobile network device 201 and verify if it is operating in its personal network 221 or outside. In such a case, the battery pack 130 may forward information of its attached power tool 120, e.g., the ID of the power tool 120, registration and operation in the personal network 221. It may be possible that a battery pack 130 may be assigned and registered to the personal network 221 and is connected to the personal network 221, however, the power tool 120 is not assigned to this network 221. In this case, the tool may stop operating.

The tool devices 120, 130, 140 may implement a time-period during which they may continue to operate when they are outside their personal network 221. E.g., power tools 120, battery packs 130, or chargers 140 may stop operating only if they are out of their personal network 221 for a week. The tool devices 120, 130, 140 may have a way to signal that they are out of their personal network 221 and/or that they will stop operating.

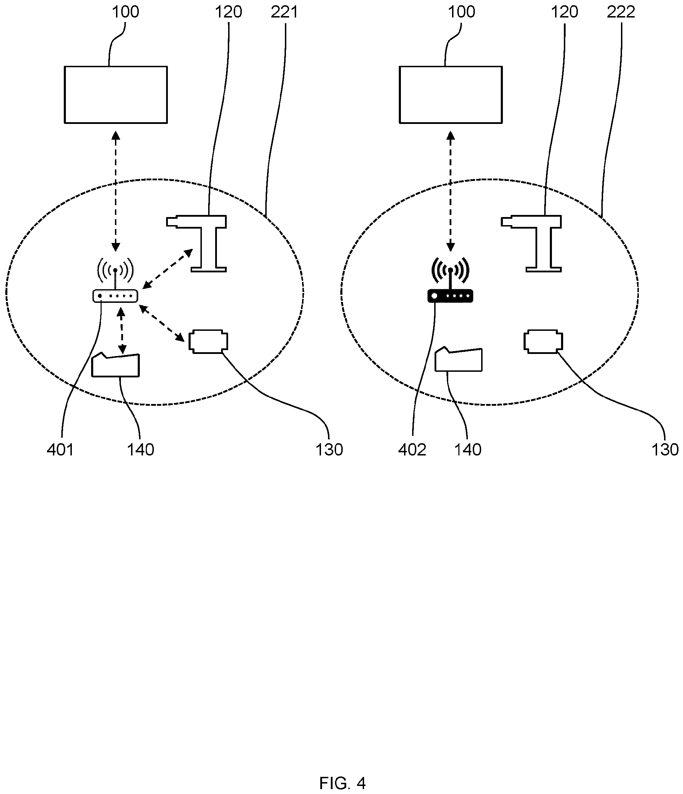

The discussion in relation to Fig. 2 and Fig. 3 has referred to binding tool devices 120, 130, 140 essentially to a worker 301, 302 by a mobile network device 201, 202 of the worker 301, 302. In a similar manner, tool devices can be assigned to a location with a network created by a stationary network device 401, 402. This is shown in Fig. 4. E.g., tool devices 120, 130, 140 can be assigned to a location, e.g., a warehouse or a jobsite. Usually, managers 801 assign the tool devices 120, 130, 140 to their respective locations in the asset management system 100 depending on their business processes.

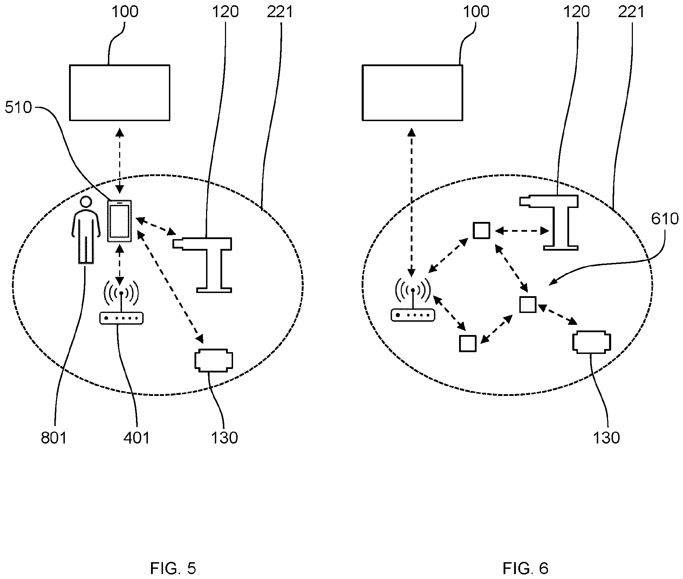

When a local network 221, 222 is created by a stationary network device 401, 402 at a fixed location and tool devices 120, 130,140 are assigned to the network 221, they are, essentially, assigned to the location of the network 221. The local network 221, 222 may be implemented at a location by using, e.g., a gateway installed in a warehouse, container, or a jobsite or with a mesh network, as shown in Fig. 6, installed on a large jobsite as stationary network device 401, 402. When tool devices 120, 130, 140 are now moved from one site to another, in Fig. 4 from the location covered by the network 221 from the stationary network device 401 to the location covered by the network 222 from the stationary network device 402, the tool devices 120, 130, 140 lose their connection to the network 221 and may stop operating.

The situation is for networks 221, 222 created by stationary network devices 401, 402 mutatis mutandis very similar to the situation discussed above for networks 221, 222 created by mobile network devices 201, 202. Tool devices 120, 130, 140 may send RF beacons, scanned, and received by the gateway or by a mesh network 610, acting as stationary network device 401, 402. The gateway or the mesh network 610, acting as stationary network device 401, 402, may communicate with the asset management system 100 and receive or create credentials as described above.

Fig. 5 shows that for the registration of a tool device 120, 130, 140 a mobile network device 510 of a responsible manager 801, e.g., jobsite manager, may be used. The mobile network device 510 can communicate with the asset management system 100, and the gateway or mesh network 610, serving as stationary network device 401 at the location, and with the tool devices 120, 130, 140 to install the required credentials. Once the tool devices 120, 130, 140 have the required network information, the local network 221, 222 can operate as described above for networks created by mobile network devices 201, 202.

The power tools 120, battery packs 130 or chargers 140 may automatically stop working when they are outside their personal or local networks 221. There may be also situations, where it is preferable when tool devices 120, 130, 140 continue to operate until they receive an explicit locking command, even when the tool devices 120, 130, 140 are outside of their personal or local network 221. Similarly, an unlocking command may also be sent explicitly when the tool devices 120, 130, 140 return to their personal or local network 221.

Locking or unlocking commands may be triggered by the personal network 221, i.e., by the mobile network device 201 of the worker or by the local network, i.e., by the stationary network device 401, e.g. the gateway. The locking or unlocking commands may be triggered based on the result of the determining whether the tool device is in the first area and/or connected to and/or connectable to the first wireless network. E.g., tool devices 120, 130, 140 may send RF beacons that are scanned by their personal or local network 221. If these networks 221 cannot find their tool devices 120, 130, 140 for a certain time period, e.g., because they are moved out of the range of the network 221 and into the range of network 222, the network device 201, 401, e.g. the smartphone or the gateway, can create lock commands and forward these to the asset management system 100.

The asset management system 100 can forward the locking command to lost or stolen tool devices 120, 130, 140, e.g., via cellular connectivity if the tool devices 120, 130, 140 are equipped with cellular connectivity. The locking commands may be also sent via cellular connectivity to chargers 140 and from the chargers to battery packs 130 or power tools 120, when the battery packs 130 are charged or connected to a power tool 120, the battery pack 130 may serve as data shuttle, receiving data from the charger 140 while charged and transferring data, while supplying power to the power tool 120, and vice versa. Similarly, the mobile or stationary network device 201, 401 can also create unlock commands when the tool devices 120, 130, 140 are seen again. In this case, the network devices 201, 401 can also send unlock commands to the tool devices directly, as they are back in their network 221.

In another embodiment, it is also possible that the network devices 201, 401 of personal or local networks 221 inform the asset management system 100 that tools devices 120, 130, 140 are not seen anymore and the asset management system 100 itself creates the locking commands. When the missing, lost, or stolen tool devices are seen anywhere again, the asset management system 100 may send these locking commands to them. Similarly, the asset management system 100 may also create and forward unlocking commands for the tool devices 120, 130, 140 to the network devices 201, 401 when they inform the asset management system 100 that the tool devices 120, 130, 140 have returned to the network 221 they are assigned to. Locking commands may also be triggered by unauthorized personal or local networks 222, that recognize that the tool devices 120, 130, 140 are not at their authorized locations.

Locking and unlocking commands may be used at locations without local connectivity or where the local connectivity is not reliable for theft protection. If tool devices 120, 130, 140 are assigned to such a region, they may be automatically unlocked, when they are moved in the region or automatically locked when they are seen outside this region. The lock or unlock commands can be created on the asset management system 100 based on the location of the tool devices 120, 130, 140.

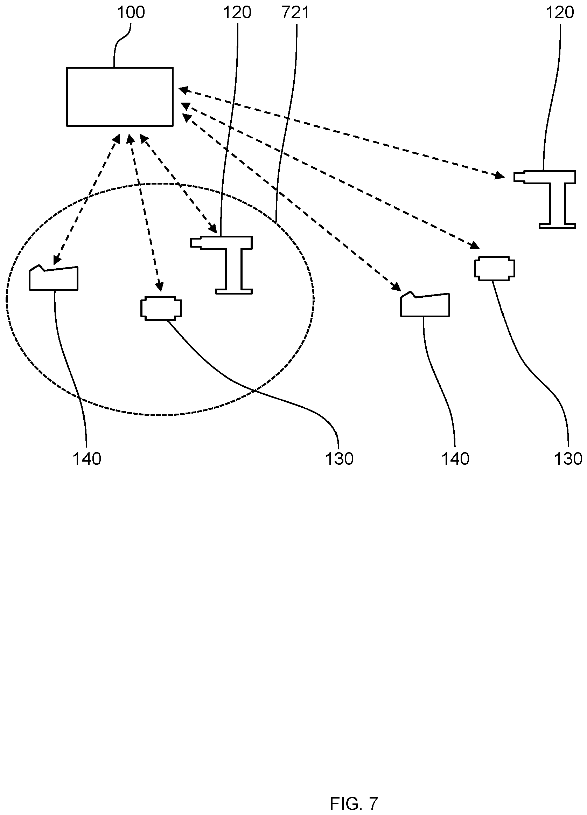

Fig. 7 show an example where power tools 120, battery packs 130, and/or or chargers 140 are equipped with GPS, location based on cellular network, Wi-Fi, and cellular connectivity and can directly send their location updates to the asset management system 100. In particular send an update when the tool devices 120, 130, 140 leave the allowed area 721.

Tags may be also attached to power tools 120, battery packs 130, and/or or chargers 140, the tags sending RF beacons, which are scanned, e.g., by gateways with positioning technology, e.g., GPS, location based on cellular network, Wi-Fi. The asset management system 100 can send commands to power tools 120, battery packs 130, and/or or chargers 140, e.g., via cellular connectivity if the tool devices 120, 130, 140 have cellular connectivity, or via cellular connectivity to chargers 140 and to battery packs 130 or power tools 120 when the battery packs 130 are charged on the charger 140 with cellular connectivity or supply power to the power tool 120.

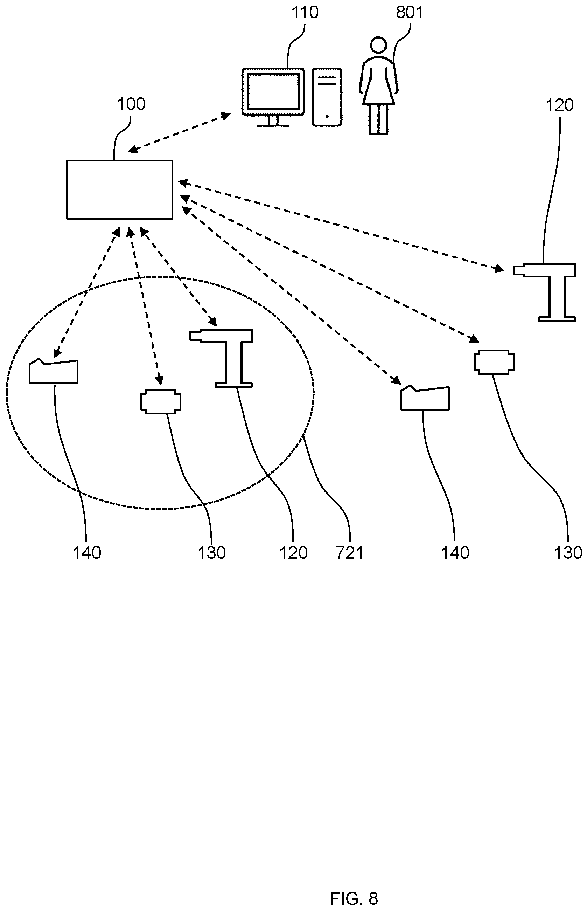

Fig. 8 shows how a location manager 801 may be included in the communication. When tool devices 120, 130, 140 are not seen in their personal network 221, local network 221 or in their geofenced region 721 a locking command is only sent when confirmed by this manager 801. Similarly, users can also be notified if the locked tool devices 120, 130, 140 are seen again at their assigned location. The locked tool devices 120, 130, 140 may be unlocked when this is confirmed by the manager 801 or they can be unlocked automatically.

Tool devices 120, 130, 140 may also be assigned to multiple workers 301, 302 or to multiple locations or areas, allowing that they can be shared by multiple workers 301, 302 or can be used at different locations. The described methods to install the required credentials can be used for the tool devices 120, 130, 140 so that they can register to the multiple personal or local networks 221.

Although the present invention has been described in accordance with preferred embodiments, it is obvious for the person skilled in the art that modifications are possible in all embodiments.

### REFERENCE NUMERALS

- 100: asset management system
- 110: input/output system
- 120: power tool
- 130: battery pack
- 140: charger
- 201: first mobile network device
- 202: unauthorized mobile network device
- 221: authorized network
- 222: unauthorized network
- 301: authorized user
- 302: unauthorized user
- 401: authorized stationary network device
- 402: unauthorized stationary network device
- 510: mobile network device of manager
- 610: mesh network
- 721: allowed area
- 801: manager
- S100: assigning tool device to an area and/or to a network
- S200: locating tool device or registering tool device on network
- S300: determining whether tool device is staying in in assigned area or on network
- S400: disabling or limiting the operation of a tool device.

## Claims

1. A method to restrict the use of a tool device (120, 130, 140), the tool device (120, 130, 140) being a battery pack (130), a power tool (120), or a charger (140) of a power tool system, comprising:
- assigning the tool device (120, 130, 140) to a first area (721) and/or to a first wireless network (221), particularly by an asset management system (100),
- locating the tool device (120, 130, 140) in a first area (721) and/or registering the tool device (120, 130, 140) to a first wireless network (221),
- determining whether the tool device (120, 130, 140) is
- in the first area (721) and/or
- connected to and/or connectable to the first wireless network (221),
- disabling or limiting the operation of the tool device (120, 130, 140) if the result of the determining is that the tool device (120, 130, 140) is
- not in the first area (721) and/or
- not connected to and/or not connectable to the first wireless network (221).

2. The method according to claim 1, wherein the first wireless network (221) is a network created by a first mobile network device (201), particularly, a smartphone, a laptop, or a tablet.

3. The method according to claim 1, wherein the first wireless network (221) is a network created by a first stationary network device (401), particularly, by a first gateway and/or set up as a mesh network (620).

4. The method according to any of claims 1 to 3, wherein the registering to the first wireless network (221) comprises:
- the tool device (120, 130, 140) iteratively sending first beacons,
- the first mobile or stationary network device (201, 401) scanning for first beacons,
- when the first mobile or stationary network device (201, 401) receives one or more first beacons from the tool device (120, 130, 140), the first mobile or stationary network device (201, 401) deriving
- from the first beacon and/or
- from a communication, established upon receiving the first beacon, between the first mobile or stationary network device (201, 401) and the tool device (120, 130, 140),
tool device (120, 130, 140) information, in particular an identifier, of the tool device (120, 130, 140),
- the first mobile or stationary network device (201, 401) communicating the tool device information to the asset management system (100),
- the asset management system (100) deciding with the tool device information whether the tool device (120, 130, 140) is assigned to the first wireless network (221),
- the asset management system (100) and/or, upon an approval from the asset management system (100), the first mobile or stationary network device (201, 401) creating credentials on the first mobile or stationary network device (201, 401) and on the tool device (120, 130, 140) for wireless pairing, if the asset management system (100) has decided that the tool device (120, 130, 140) is assigned to the first wireless network (221).

5. The method according to any of claims 1 to 3, wherein the registering to the first wireless network (221) comprises:
- the first mobile or stationary network device (201, 401) obtaining information on all tool devices (120, 130, 140) assigned to the first wireless network (221) from an asset management system (100),
- the tool device (120, 130, 140) iteratively sending first beacons,
- the first mobile or stationary network device (201, 401) scanning for first beacons,
- when the first mobile or stationary network device (201, 401) receives one or more first beacons from the tool device (120, 130, 140), the first mobile or stationary network device (201, 401) deriving
- from the first beacon and/or
- from a communication, established upon receiving the first beacon, between the first mobile or stationary network device (201, 401) and the tool device (120, 130, 140),
tool device information, in particular an identifier, of the tool device (120, 130, 140),
- the first mobile or stationary network (221) deciding with the obtained information on all tool devices (120, 130, 140) assigned to the first wireless network (221) and the tool device information whether the tool device (120, 130, 140) is assigned to the first wireless network (221),
- the first mobile or stationary network device (201, 401) creating credentials on the first mobile or stationary network device (201, 401) and on the tool device (120, 130, 140) for wireless pairing, if it has decided that the tool device (120, 130, 140) is assigned to the first wireless network (221).

6. The method according to any of claims 1 to 5, wherein the
- the first mobile or stationary network device (201, 401) communicates with the asset management system (100) via cellular connectivity, or
- the first stationary network device (401) communicates with the asset management system (100) via a second mobile network device, which is connected to the first stationary network device (401), and which communicates via cellular connectivity to the asset management system (100).

7. The method according to any of claims 1 to 6, wherein determining whether the tool device (120, 130, 140) is in the first area (721) and/or connected to and/or connectable to the first wireless network (221) comprises:
- establishing a persistent connection, particularly a persistent Bluetooth connection, between the tool device (120, 130, 140) and the first wireless network (221) and
- determining by the tool device (120, 130, 140) and/or the first mobile or stationary network device (201, 401) that the tool device (120, 130, 140) is not connected or connectable to the first wireless network (221), when the connection breaks and, optionally, cannot be reestablished within a predefined first time period, particularly, within 1 minute,
and/or
- sending second beacons by the tool device (120, 130, 140)
- scanning for the second beacons with the first mobile or stationary network device (201, 401),
- determining by the first mobile or stationary network device (201, 401) whether the tool device (120, 130, 140) is connectable based on the results of the scanning for the second beacon, particularly determining that the tool device (120, 130, 140) is not connectable, when no second beacon is detected within a predefined second time period, particularly within 1 minute,
- optionally, informing the tool device (120, 130, 140) iteratively that it is connectable to the first wireless network (221) by establishing a connection of the tool device (120, 130, 140) and the first wireless network (221), in particular a temporary Bluetooth connection,
and/or
- sending third beacons by the first mobile or stationary network device (201, 401),
- scanning for the third beacons with the tool device (120, 130, 140),
- determining by the tool device (120, 130, 140) whether it is connectable with the first mobile or stationary network device (201, 401) based on the scanning for the third beacons, particularly, determining that the tool device (120, 130, 140) is not connectable when no third beacon is detected within a predefined third time period, particularly within 1 minute.

8. The method according to any of claims 1 to 7, wherein disabling or limiting the operation of the tool device (120, 130, 140) is done by the tool device (120, 130, 140)
- when the tool device (120, 130, 140) has determined that it is not connected to and/or not connectable to the first wireless network (221) or
- after a residual time period, operating time period, and/or number of operating actions, which is stored on the tool device (120, 130, 140), after the tool device (120, 130, 140) has determined that it is not connected to and/or not connectable to the first wireless network (221).

9. The method according to any of claims 1 to 7, comprising:
- sending a result from determining whether the tool device (120, 130, 140) is connected to and/or connectable to the first wireless network (221) to the asset management system (100),
- sending a command to disable or limit the operation to the tool device (120, 130, 140) by the asset management system (100)
- by cellular connectivity if the tool device (120, 130, 140) is equipped with cellular connectivity,
- via a first charger (140), which is equipped with cellular connectivity, to the tool device (120, 130, 140) if the tool device (120, 130, 140) is a battery pack (130) being charged on the first charger (140),
- via a first charger (140), which is equipped with cellular connectivity, and via a first battery pack (130), which has been charged on the first charger (140) and is supplying the tool device (120, 130, 140) with power if the tool device (120, 130, 140) is a power tool (120), and/or
- via a second wireless network, which is connected to the asset management system (100), particularly, a second wireless network configured to register the tool device (120, 130, 140) when assigned to it, particularly, an unauthorized wireless network that recognizes that the tool device (120, 130, 140) is not authorized to register.

10. The method according to any of claims 1 to 9, wherein the tool device (120, 130, 140) is a power tool (120)
- not equipped with wireless connectivity,
- equipped with wired connectivity for communication with a battery pack (130) connected to the power tool (120), and
- the power tool (120) communicates with the first wireless network (221), particularly, registers and/or sends beacons to the first wireless network (221), through the battery pack (130).

11. The method according to any of claims 1 to 10, wherein
- a location determining module of the tool device (120, 130, 140) is locating the tool device (120, 130, 140),
- the tool device (120, 130, 140) is sending iteratively location updates via cellular connectivity to the asset management system (100), and
- the asset management system (100) is determining whether the tool device (120, 130, 140) is in the first area (721) based on the location updates.

12. The method according to any of claims 1 to 11, wherein
- a tag, attached to the tool device (120, 130, 140), is sending fourth beacons,
- a second gateway with cellular connectivity and positioning technology is scanning the fourth beacons and is locating the tool device (120, 130, 140),
- the second gateway is sending iteratively location updates via cellular connectivity to the asset management system (100), and
- the asset management system (100) is determining whether the tool device (120, 130, 140) is in the first area (721) based on the location updates.

13. The method according to claim 11 or 12, wherein the location determining module and/or the second gateway uses data comprising global positioning system (GPS) data, cellular network data, and/or data from wireless networks, particularly according to IEEE 802.11-Standard (WiFi) for locating.

14. A power tool ecosystem comprising:
- an asset management system (100),
- a power tool system comprising as tool devices (120, 130, 140)
- a plurality of power tools (120), optionally, configured for wireless communication, particularly, for cellular communication,
- a plurality of battery packs (130), optionally, configured for wireless communication, particularly, for cellular communication,
- a plurality of chargers (140), optionally, configured for wireless communication, particularly, for cellular communication,
further comprising
- a stationary and/or a mobile network device (201, 401),
and/or
- a location determining module in one or more of the tool device (120, 130, 140)s or
- tags, sending beacons, attached to one or more tool devices (120, 130, 140) and
- a gateway with cellular connectivity and positioning technology,
the power tool ecosystem configured for the method to restrict the use of a tool device (120, 130, 140) according to any of claims 1 to 13.

15. A computer program product comprising instructions which, when the program is executed by one or more processors of the asset management system (100), the tool devices (120, 130, 140), the mobile and/or stationary network devices in the power tool ecosystem of claim 14, cause the power tool ecosystem to carry out the method of any of the claims 1 to 12.
